Europäisches Patentamt

European Patent Office

Office européen des brevets

(19)

(11) Publication number: **0 071 444**

**A1**

(12) # EUROPEAN PATENT APPLICATION

(21) Application number: **82303927.6**

(22) Date of filing: **23.07.82**

(51) Int. Cl.³: **E 06 B 9/24**
**A 47 H 23/08**

(30) Priority: **23.07.81 GB 8122804**

(43) Date of publication of application:
**09.02.83 Bulletin 83/6**

(84) Designated Contracting States:
**DE GB SE**

(71) Applicant: UNIVERSITY COLLEGE CARDIFF
CONSULTANTS LTD.
P.O. Box 78
Cardiff, CF1 1XL(GB)

(71) Applicant: Reliant Tooling Sales Limited
Asheridge Road
Chesham Bucks.(GB)

(72) Inventor: Ryan, Paul Anthony
3 Llanbleddian Gardens
Cathays Cardiff Wales(GB)

(72) Inventor: Tautz, Leon R.
"Settlers" Foundry Lane
Loosley Row Aylesbury Bucks(GB)

(74) Representative: Arthur, Bryan Edward
Withers & Rogers 4 Dyer's Buildings Holborn
London EC1N 2JT(GB)

(54) Insulation material.

(57) This invention relates to insulation material and particularly to laminated insulation material. In more detail the insulation material of the invention comprises a substrate having at least a proportion of the area of one surface thereof coated with first a layer of a metallic material which is at least partially overlaid by a second layer of material which masks the overlaid metallic material without substantially reducing the insulative effect of the metallic material. The material of the invention is eminently suitable for use in the manufacture of roller-blinds in which case the substrate is flexible and the whole of one major surface of the substrate is wholly overlaid by the metallic material and the metallic material is wholly overlaid by the said second layer.

EP 0 071 444 A1

Croydon Printing Company Ltd.

0071444

INSULATION MATERIAL

This invention relates to insulation material and particularly to laminated insulation material. The production of effective insulation materials is an important problem facing all countries today and this is becoming more important as fuel prices continue to rise. For example, in the average detached British home, in excess of three quarters of heating energy is lost via walls, windows, floor and roof spaces and, of this loss, up to twenty five percent is lost through singly glazed windows. It is, therefore, of utmost importance to conserve heat energy.

Materials having metallised or metallic surfaces can be used for insulation purposes in that they have a high reflectivity and reflect radiant heat back to a hot source. However, when a metallic surface is positioned to face away from a hot source, it reduces the heat radiated from it because the metallic surface possesses low emissivity, that is, a poor ability to radiate heat.

This is demonstrated by the fact that an enclosed air cavity is at least twice as effective at reducing heat loss when its boundary surfaces possess low emissivity, than if they had high emissivity.

The insulating effectiveness of a material is its ability to resist heat flow - known as its thermal resistance and measured in units of $m^2k/w$. For example, the thermal resistance of an unventilated air space of 25mm width and when the heat flow is horizontal or upwards, is 0.18 $m^2k/w$ with high emissivity boundary surfaces, and 0.35 $m^2k/w$ with low emissivity boundary surfaces. When the heat flow is downwards, the thermal resistance of the same air space is 0.22 $m^2k/w$ with high emissivity boundary surfaces, compared with 1.06 $m^2k/w$ with low emissivity boundary surfaces, that is, nearly 5 times as effective.

Since most building materials possess a high emissivity (0.90-0.95) and since radiation normally accounts for about two thirds of the heat transfer, we have found that building materials having metallised or metallic surfaces can be employed to substantially reduce, if not eliminate this radiation thereby producing an insulation material with a very much higher thermal resistance.

There are, however, a number of situations where a metallic surface is not aesthetically acceptable and according to one aspect of this invention an insulation material comprises a substrate having at least a proportion of the area of one surface thereof coated with first a layer of a metallic material which is at least partially overlaid by a second layer of material which masks the overlaid metallic material without substantially reducing the insulative effect of the metallic material.

Preferably, the whole of one major surface of the substrate is wholly overlaid by the metallic material and the metallic material is wholly overlaid by the said second layer. If desired, however, the second layer may be applied to the first and metallic layer in the form of a pattern by, for example, spraying, screen printing, use of transfers etc. Also, according to requirements, a mixture of the materials used for the metallic material and the material of the second layer may be applied to the substrate separately or together by spraying or otherwise, thereby producing a speckled or other appearance.

The substrate may be rigid or flexible or structural or non-structural. A flexible material in accordance with the present invention is particularly suitable for use in the manufacture of roller blinds.

In the case of rigid and structural substrates any conventional building or engineering material may be used. In the case of flexible substrates, the substrate material may be a woven or non-woven fabric, felt or film made from natural or synthetic material or a mixture of natural and synthetic materials. The metallic material may itself be in the form of a laminate comprising a base layer of a plastics material, eg. a polyester film or non-plastics material, eg. paper, coated on one or both major surfaces with a layer of reflective material. The reflective material may be obtained by aluminising the base layer.

In the United Kingdom, BS5867 Part IIA 1980 is the British Standard which sets out the fire retardant requirements applicable, _inter alia_, to the manufacture of roller-blinds made from or containing fabric materials. Where the present invention is applied in the manufacture of a material having a flexible substrate and suitable for use in the manufacture of roller or other blinds or curtains, we have found that it is only necessary to treat the substrate with a fire retardant materials may be used provided such materials are non-hygroscopic. We prefer to use a polyvinylidene chloride antimony oxide, deca-bromide phenyl oxide, ammonium phosphate composition as the retardant material. On ignition of a fabric treated with this preferred fire retardant material, an endothermic reaction is created producing copious quantities of antimony halide to form an effective oxygen barrier thereby effectively smothering any flame. The endothermic reaction serves to cool localised areas thereby reducing any risk of spontaneous ignition of the material of the invention.

The preferred fire retardant material may be applied to the material of the invention by spraying, dipping or other known techniques. Moreover, as indicated we have found that it is only necessary to treat the substrate as opposed to the finished materials, with a fire retardant material.

The layers constituting a flexible insulation material in accordance with the invention may be affixed to adjacent layers using a thermoplastic dry film or a wet coating adhesive.

When considering reflectivity in connection with insulation, it is important to distinguish between the reflection of visible light and the reflection of long wavelength infra-red radiation. For example, the silvered surface on the back of a mirror reflects both forms of light but, because glass is a poor transmitter of longwave infra-red radiation, the heat reflecting properties of a mirror surface are no better than a coating of black paint. On the other hand, the material we use for the said second layer preferably transmits infra-red radiation at the wavelengths connected with the heat radiation from a source at room temperature (approximately 10 micron) but does not transmit the wavelengths associated with visible light (0.4 to 0.7 micron).

Thus, the laminate reflects heat whilst the overlaid metal is masked from view.

Our experiments with infra-red transmitting layers included use of lacquer systems with reflectivities in the range 15-90% and, when applied to an aluminium metallic layer which had been vacuum deposited on a substrate made from plastic film, good results were obtained.

This demonstrated the relative absorbtion for the lacquer system compared with the reflectance for a bare aluminium layer of 95%.

Clear, dyed and pigmented lacquers were evaluated and a pigmented polyamide system applied to the metallic material was found to give a good combination of heat reflectance and appearance. These varied with pigment types and coating weights and a 2 gram per square metre layer of a buff/fawn pigmented polyamide lacquer produced a reflectance approximately 70%. The coating weight may be varied according to the use and desired location of use of the insulation material but we have found satisfactory results can be obtained using up to 20 grams per square metre of the second and lacquer layer.

This was considered to give adequate heat saving and an excellent appearance.

The second layer substantially maintains an infra-red transmitting gap on the face of the metal surface at all times, thus ensuring a radiation-barrier even in the absence of an air space. The second layer also protects the metallic surface from the environment. Whereas an uncovered or unprotected metallic surface would most probably soon deteriorate, we have found that the second layer withstood extreme temperatures, and light intensity when subjected to accelerated ageing in a weatherometer.

A laminated insulation material in accordance with the present invention has many applications in buildings as an effective insulation material.

The metal layer may be applied directly or indirectly on to a plastics film or paper, or any other suitable substrate material to which a metal could be fixed or which can be metallised. Where the metal layer is applied to a flexible substrate such as plastics film or paper, the so formed flexible composite could be used on its own, in conjunction with air spaces, or laminated to other materials such as a fibrous quilt, or other insulation materials. Such materials could be used in many places in a building, eg. in the roof, loft, floor, wall cavity, as wall covering or window covering. Further, the flexible composite may be incorporated in an article of clothing, eg. an anorak or a survival suit. Use of the material in a building is extremely important because thermal photography tests show that the window of a building is one of, if not the most concentrated area of heat loss in a building. In a domestic building for example, it accounts for 25% of the total heat lost from an uninsulated house, and as much as 40% of the loss from a house insulated to conventional present day standards.

The use of laminated insulation material according to the invention and in the form of curtains or blinds provides an energy saving device for windows, which not only considerably reduces heat losses from the house, but also reduces solar heat gains dramatically. In certain areas in the world, it is more important to reduce solar heat gains than heat losses, to minimise the input of cooling energy, that is, when air conditioning a building. In use, the second layer is disposed to face the window and, therefore, reflects back the solar rays normally transmitted by the window. Our experiments show the ability of the material of the second layer to reflect solar rays results in a reduction of solar heat gain through windows by as much as 80%. Further, the insulation material of the invention also reduces heat losses by its inability to radiate heat out to a cold window due to its low emissivity. When combined with an air space between the window and coated metal; a very effective insulating medium results.

This air space can be achieved by a roller-blind maintaining a gap between the insulation material (second layer facing the window) and the window glass. In the case of a window blind, the metal layer can be laminated to a fabric and used in a conventional roller-blind and disposed to maintain an optimum air space of 20 mm, so as to minimise conduction and convection by, for example, side guides. Such a device reduces the heat lost through a single pane of glass by nearly 60%. The ability of a material to transmit heat is given by its thermal transmission (U) value (units - $w/m^2k$). The U-value for single glazing depends on its type, thickness, orientation, exposure etc., but is commonly 5.6 $w/m^2k$. The U-value for the same window covered with a device as described above is 2.3 $w/m^2k$.

The heat saving thus compares favourably with heat savings achieved with the conventional insulating medium; double glazing, which commonly has a U-value of 2.8 $w/m^2k$.

Where the blind is used in conjunction with double glazing a U-value of ·1.6 w/m$^2$k could be achieved thus representing a saving of over 70%.

It will, therefore, be appreciated that a blind made from an insulation material according to the invention will help to control the in-the-room temperature all the year round. In summer, it should be pulled down sufficiently to block out direct sunlight yet allowing natural light to enter the building. In winter, the blind should be fully drawn at night to minimise major heat lossess and raised in the day to allow the sun to warm up the building. A blind incorporating the laminated insulation material of the invention, therefore, offers a cost effective insulation medium for all climates whilst enhancing the appearance of a building and the decor of a room.

Although reference has been made to the use of roller-blinds the insulation material of the invention may be used as the slats or applied to the slats of venetian and other slatted blinds. Furthermore, sheets of the laminated insulation material may be suspended in the cavaties of walls during building. A further use of such material is as backing materials for transparent solar heating panels so that the heating medium, usually a liquid, receives not only direct solar heat but also reflected solar heat.

CLAIMS

1.    An insulation material comprising a substrate having at least a proportion of the area of one surface thereof coated with a first layer of a metallic material which is at least partially overlaid by a second layer of material which masks the overlaid metallic material without substantially reducing the insulative effect of the metallic material

2.    An insulation material according to claim 1 wherein the whole of one major surface of the substrate is wholly overlaid by the metallic material and the metallic material is wholly overlaid by the said second layer.

3.    An insulation material according to claim 1 wherein constituents of the first and second layers are together applied to one major surface of the substrate.

4.    An insulation material according to any preceding claim wherein the substrate is flexible and is made from a woven or non-woven natural or synthetic material or a mixture of natural and synthetic materials.

5. An insulation material according to claim 4 wherein the metallic material is in the form of a laminate.

6. An insulation material according to claim 5 wherein the said laminate comprises a base layer of a plastics material having applied to at least one surface thereof a layer of metallic material.

7. An insulation material according to claim 6 wherein the base layer has a coating of metallic material applied to both surfaces thereof.

8. An insulation material according to anyone of class 4, 5 or 6 wherein the several layers are affixed to adjacent layers by means of an adhesive comprising a thermoplastic dry film.

9. An insulation material according to any preceding claim wherein at least the substrate is treated with a fire retardant material.

10. A roller-blind made from a material as claimed in any preceding claim.

European Patent
Office

**EUROPEAN SEARCH REPORT**

0071444
Application number

EP 82 30 3927

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| X | EP-A-0 025 197 (PUSCH) <br><br> * page 4, lines 29-35; pages 5,6; claims; figure 1 * | 1,2,3, 4,7,10 | E 06 B 9/24 <br> A 47 H 23/08 |
| X | DE-A-2 841 966 (REFLEX) <br><br> * page 9, paragraphs 3,4; page 10, paragraphs 1-3; figure 1 * | 1,2,3, 4,7,10 | |
| X | FR-A-2 378 937 (ROBERT BOSCH) <br><br> * page 7, lines 11-40; page 8; page 9, lines 1-14; figures 1,2 * | 1,2,3, 4,8,10 | |
| A | FR-A-2 464 682 (CUSTOMAGIC) <br><br> * page 2, lines 2-38; pages 3,4; figure 2 * | 1,2,4, 5,6,8, 10 | TECHNICAL FIELDS SEARCHED (Int. Cl. 3) |
| A,P | EP-A-0 040 329 (KONRAD HORNSCHUH) <br> * claim 1 * | 9 | E 06 B <br> A 47 H |

The present search report has been drawn up for all claims

| Place of search | Date of completion of the search | Examiner |
|---|---|---|
| THE HAGUE | 13-10-1982 | VIJVERMAN W.C. |